**Europäisches Patentamt**

**European Patent Office**

**Office européen des brevets**

(19)

(11) Veröffentlichungsnummer: **0 316 330 B1**

(12) # EUROPÄISCHE PATENTSCHRIFT

(45) Veröffentlichungstag der Patentschrift:
20.03.91 Patentblatt 91/12

(51) Int. Cl.⁵: **F02F 3/00, F16J 1/14**

(21) Anmeldenummer: **87904835.3**

(22) Anmeldetag: **24.07.87**

(86) Internationale Anmeldenummer:
**PCT/DE87/00333**

(87) Internationale Veröffentlichungsnummer:
**WO 88/01017 11.02.88 Gazette 88/04**

(54) **KOLBENOBERTEIL MIT ANGESETZTEN LAGERSTÜTZEN FÜR DIE AUFLAGE DES KOLBENBOLZENS EINER KOLBENBRENNKRAFTMASCHINE.**

(30) Priorität: **01.08.86 DE 3626129**

(43) Veröffentlichungstag der Anmeldung:
**24.05.89 Patentblatt 89/21**

(45) Bekanntmachung des Hinweises auf die
Patenterteilung:
**20.03.91 Patentblatt 91/12**

(84) Benannte Vertragsstaaten:
**FR GB IT SE**

(56) Entgegenhaltungen:
EP-A- 0 011 300
DE-A- 2 543 478
DE-A- 3 210 771
FR-A- 2 315 005

(73) Patentinhaber: **Elsbett, Ludwig**
**Industriestrasse 14**
**W-8543 Hilpoltstein (DE)**
Patentinhaber: **Elsbett, Günter**
**Industriestrasse 14**
**W-8543 Hilpoltstein (DE)**
Patentinhaber: **Elsbett, Klaus**
**Industriestrasse 14**
**W-8543 Hilpoltstein (DE)**

(72) Erfinder: **Elsbett, Ludwig**
**Industriestrasse 14**
**W-8543 Hilpoltstein (DE)**
Erfinder: **Elsbett, Günter**
**Industriestrasse 14**
**W-8543 Hilpoltstein (DE)**
Erfinder: **Elsbett, Klaus**
**Industriestrasse 14**
**W-8543 Hilpoltstein (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

# Beschreibung

Kolbenoberteil mit angesetzten Lagerstützen für die Auflage des Kolbenbolzens einer Kolbenbrennkraftmaschine

Kolben zweiteiliger Bauart, deren Oberteil dichtende, die Gaskräfte aufnehmende Funktion haben und deren Unterteil führende, die Seitenkräfte aufnehmende Funktion haben, wobei beide Kolbenteile nur über einen Bolzen gelenkig in Zusammenhang gesetzt sind, sind aus der DE-OS 32 10 771 bekannt.

Solche Konstruktionen nutzen die Zweiteiligkeit dahingehend aus, das Kolbenoberteil z. B. aus Eisen, das Unterteil z.B. aus Aluminium zu fertigen, so daß das Kolbenoberteil in bezug auf Wärmedichtheit und Gasdichtheit optimiert ist, das Kolbenunterteil in bezug auf Gleitfähigkeit und Wärmeleitfähigkeit. Aufgrund der Funktionsteilung und Materialwahl besitzen solche Kolben hohe Stabilität und können mit sehr hohen Gasdrücken beaufschlagt werden, wie sie im modernen Dieselmotorenbau angewandt werden. Um die hohen Drücke auch bei Gewichtsoptimierung des Kolbenoberteils anwenden zu können, wurde der Vorschlag gemacht, die Kolbenstatik entsprechend den Kraftlinien so auszulegen, daß die Hauptkraftlinien die Kolbenkonturlinien nicht verlassen (DE-OS 32 10 771).

Die Übretragung der Gaskräfte vom Kolbenoberteil auf den Bolzen erfolgt bei dieser Konstruktion ausschließlich über die Lagerstützen. Da bei dem gattungsmäßigen Kolben sämtliche Kräfte über die Lagerstützen laufen und sonstige stabilisierende Verbindungen etwa von Kolbenober- und Kolbenunterteil entfallen, ist es notwendig geworden, die Konstruktion der Lagerstützen erneut zu überdenken.

Die Nachteile des bisherigen Standes der Technik sind die freistehenden Lagerstützen, die bei höheren Gasdrücken in ihrer Stabilität begrenzt sind. Eine bloße Verstärkung der freistehenden Lagerstützen bringt nicht den gebotenen.

Erfolg und wirkt sich bezüglich der ebenfalls anzustrebenden Gewichtsoptimierung des Kolbenoberteils negativ aus.

Die gewünschte Stabilität konnte erst erreicht werden durch den Einzug von Seitenwänden, die die Lagerstützen verbinden, wobei diese Maßnahme bezüglich Gewichtsoptimierung des Kolbens nicht so stark ins Gewicht fiel. Jedoch war daraufhin bei hohen Belastungen im Bereich der Außen- und Innenkanten der Lagerstützen am Bolzen hohe Belastungsmerkmale festgestellt worden. Es war zunächst unklar, wieso diese Belastungsmerkmale sowohl Außen- wie Innenkanten der Lagerstützen betrafen. Aufgrund folgender Erklärung dieses Phänomens kam es zu der weiteren Aufgabenstellung und Lösung vorliegender Anmeldung.

Die freistehenden Lagerstützen für den Kolbenbolzen sind sowohl statischen wie thermischen Einflüssen ausgesetzt. Statisch neigen sie dazu, unter der großen Belastung der Gaskraft nach auswärts wegzugrätschen. Thermisch ist die Stellung der Lagerstützen dadurch Veränderungen ausgesetzt, daß die Seitenwände eine zum Kolbenboden hin höhere Temperatur aufweisen. Die exakte Kolbenbolzenauflage erleidet somit statisch dadurch eine Veränderung, daß im Augenblick der höheren Gaskräfte nur die inneren Kanten des Kolbenbolzenauges zum Tragen kommen und überlastet werden. In der übrigen Zeit kommen im wesentlichen die äußeren Kanten des Kolbenbolzenauges zum Tragen, weil die geringere Temperatur an der Unterkante der Seitenwand ein Zusammenziehen der beiden Lagerstützen bewirkt. In dem einen wie im anderen Fall wird der Kolbenbolzen an seiner freien Beweglichkeit gehindert und örtlich überbelastet.

Die Aufrechterhaltung der Beweglichkeit des Kolbenbolzens ist für seine Tragfähigkeit enorm wichtig und auch für die Aufrechterhaltung des Schmierfilms. Sowohl im Kolbenauge wie im Pleuelauge ist es notwendig, daß der Kolbenbolzen sich unter allen Lastbedingungen drehen kann.

Der Kolben nach Anspruch 1 unterscheidet sich vom Stand der Technik (insbesondere DE-A-2 543 478) dadurch, daß die Lagerstützen durch Seitenwände verbunden sind, deren Abschlußebene in einer spezifischen Ebene liegt, und daß eine spezifische Kühlung der Seitenwände vorgesehen ist. Aus der EP-A-0 011 300 sind zwar ähnliche Seitenwände bekannt, ihre Abschlußebene liegt jedoch, wie aus der Abbildung ersichtlich, oberhalb der oberen Bolzenauflage, d. h. außerhalb von der beanspruchten spezifischen Ebene, wobei die bekannten Seitenwände Lagerstützen verbinden, die durch einen zylindrischen Mantel, und nicht durch den beanspruchten rotationssymmetrischen Kegelstumpf, zum Kolbenboden verbunden sind. Weiterhin ist keine spezifische Kühlung der Seitenwände durch EP-A-0 011 300 nahegelegt.

Die hohe Lagerbelastung durch die Gaskräfte und die Laufruhe bedingen sehr geringe Bolzenspiele, so daß sich schon sehr kleine Veränderungen in der Form der Lagerstützen für die Betriebssicherheit und Lebensdauer sehr schädlich auswirken.

Es ist also notwendig, eine Bemessung der Seitenwände zu finden, die weder ein seitliches Weggrätschen noch einen Wärmeverzug zulassen, der über das enge Kolbenbolzenspiel hinausgeht. Dieses Spiel beträgt weniger als 1/1000 des Bolzendurchmessers.

Aufgabe ist es, bei dem gattungsmäßigen Kolben die exakte Auflage der Lagerstützen auf den Bolzen für alle Betriebszustände zu finden, d. h. alle thermischen und statischen Belastungen und die Freigängigkeit des Bolzens bei dem vorgegebenen sehr geringen Bolzenspiel zu gewährleisten.

Die Lösung der Aufgabe erfolgte in verschiedener Hinsicht. Zum einen mußte die naheliegende Lösung, lediglich die Lagerstützen zu verstärken, aufgegeben werden, da eine Verstärkung der Lagerstützen nicht die gewünschte Stabilität gewährleistete und zusätzlich den Kolben gewichtsmäßig erschwerte.

Als richtiger Weg, der in den beigegebenen Ansprüchen beschrieben ist, wurde erkannt : Seitenwände zu den Lagerstützen einzuziehen, welche die Stabilität sichern, ohne gewichtsmäßig bedeutend zu sein ; die Bemaßung der Seitenwände mit ihren Abschlußebenen im Bereich zwischen der Bolzenachse und der oberen Bolzenauflagefläche der Lagerstützen festzulegen ; die Seitenwände zum Ausgleich der thermischen Einflüsse einer Spritzkühlung zu unterziehen, die eine gleichmäßige Kühlung der Seitenwände gewährleistet, so daß keine Wärmespannungen von den Seitenwänden in die Lagerstützen eingeleitet werden.

Es folgt die Bildbeschreibung, wobei die einzelnen Figuren zeigen :

In Fig. 1 ist ein Kolbenoberteil mit angesetzen Lagerstützen für den Kolbenbolzen als Schnitt durch die Kolbenbolzenebene gezeichnet ; die gattungsmäßige Statik ist eingezeichnet.

Fig. 2 zeigt den gleichen Kolben in um 90° versetzter Schnittebene. Die Brennraumgestaltung entspricht der üblichen Form für Vielstrahl-Brennverfahren.

Fig. 3 ziegt die gleiche Kolbengeometrie mit einem für das Einstrahlbrennverfahren geeigneten Kugelbrennraum.

Fig. 4 zeigt einen Querschnitt in der in Fig. 2 eingezeichneten Schnittebene.

Fig. 5, 6 und 7 zeigen einen Kolben nach Fig. 3, wobei Ober-und Unterteil des Kolbens dargestellt sind.

Die Statik des gattungmäßigen Kolbenoberteils ist durch zwei symmetrische Linien dargestellt, die am Kolbenboden im Schwerkreis (= 0,7 des Kolbendurchmessers) ansetzen, die weiter durch die Mitten der oberen Auflager der Lagerstützen am Bolzen (14) gehen und in Linie sich weiter durch die Mitten des halben unteren Auflagers des Pleuels am Bolzen (16) erstrecken.

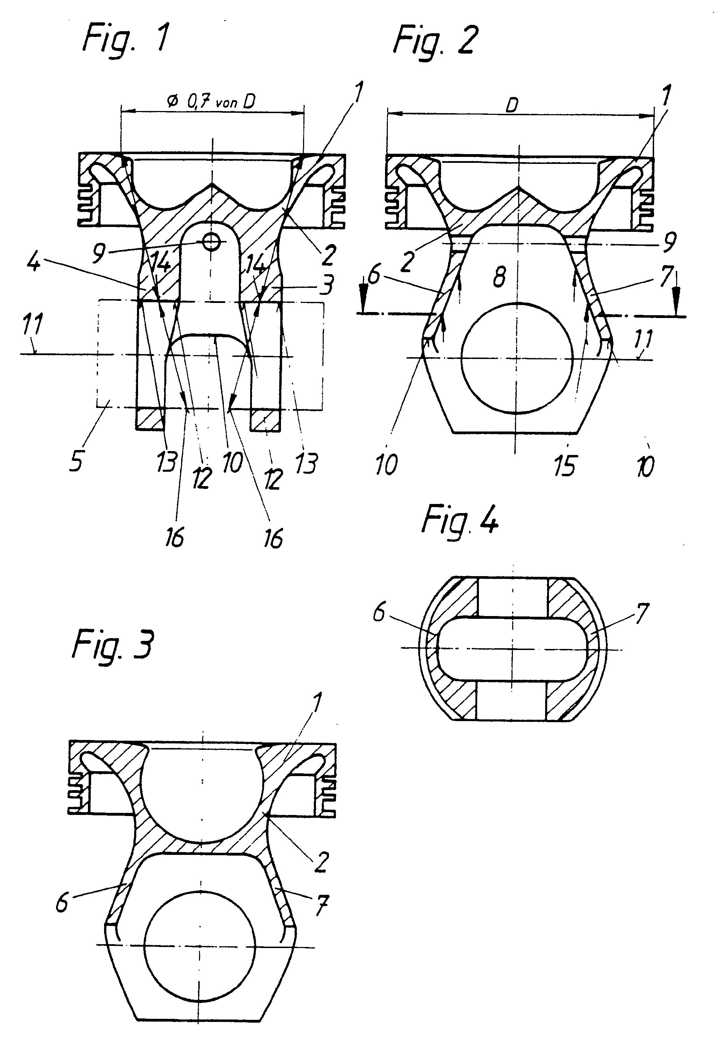

Aus den Figuren ist zu ersehen, daß die Abstützung des Kolbenbodens (1) durch einen rotationssymmetrischen Kegelmantel (2) erfolgt, an dem die Lagerstützen (3) und (4) für den Kolbenbolzen (5) angesetz sind. Die Stabilisierung der Lagerstützen (3) und (4) erfolgt durch die Seitenwände (6) und (7), deren Konturen in Fig. 2, 3 und 4 dargestellt sind. Das in dem Hohlraum (8) angesammelte Spritzöl (15) entweicht durch die Ölbohrungen (9). Für die Kolbenauflage auf dem Kolbenbolzen wird in allen Betriebszuständen durch die Bemessung der Seitenwände (6) und (7) die notwendige Gleichmäßigkeit gewährt. Wenn die Ebene (10) sich zu weit von der Bolzenachse (11) entfernt, entsteht ein hoher Auflagedruck an der Innenkante (12) dadurch, daß die Lagerstützen (3) und (4) nach außen weggrätschen. Wird die Ebene (10) für die Seitenwände (6) und (7) zu weit an die Bolzenachse (11) herangeführt, entsteht ein hoher Lagerdruck bei (13) dadurch, daß die Temperatur der Seitenwand in der Ebene (10) geringer ist als die Temperatur der Seitenwand in Höhe der Ölbohrungen (9). In diesem Falle erfahren die Lagerstützen (3) und (4) eine thermisch bedingte Schrägstellung nach innen, so daß eine hohe Belastung bei (13) entsteht. Infolge des durch die Ölbohrungen (9), deren Größe variabel ist, gegebenen Durchflusses von Spritzöl in den Hohlraum (8) wird nun einerseits der Temperaturunterschied zwischen den Ebenen (9) und (10) möglichst gering gehalten ; andererseits wird durch die Bemessung der Länge der Seitenwände (6) und (7) einer thermischen wie statischen Veränderung der Auflagefläche am Kolbenbolzen vorgebeugt.

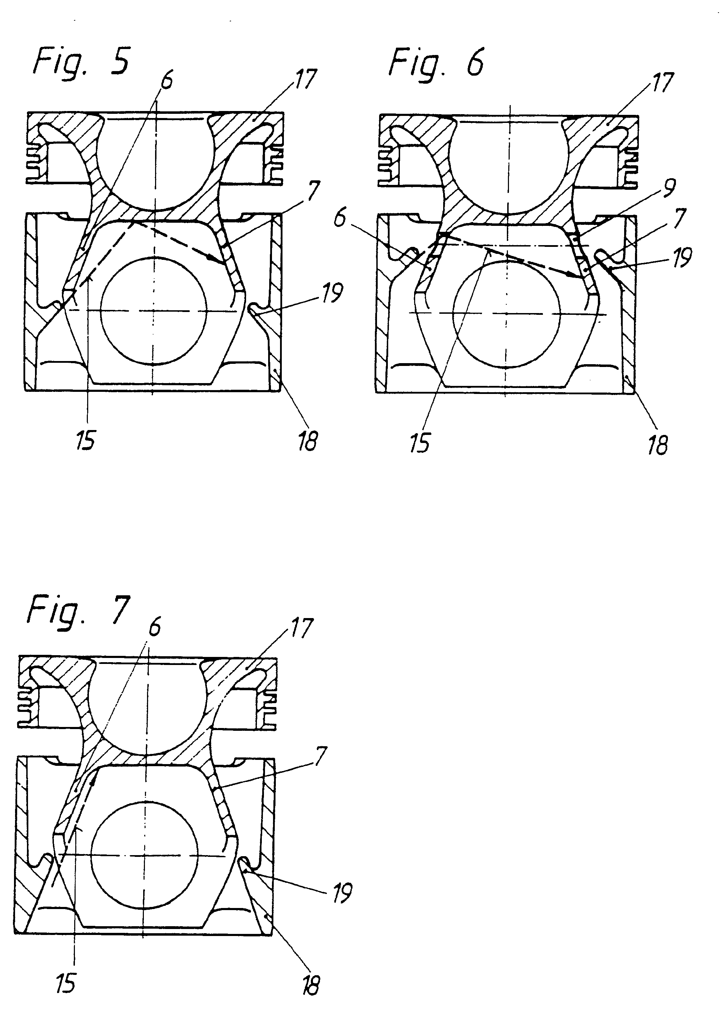

In den Fig. 5, 6 und 7 sind beide Kolbenteile in ihrer Zusammensetzung zu sehen. Das Unterteil (18) führt über Leitflächen (19) den Seitenwänden (6) und (7) des Kolbenoberteils (17) Öl (15) zu. Die Kühlung der Seitenwände (6) und (7) geschieht nach Konstruktions- und Kühlungsbedürfnis von außen (Fig. 6) oder von innen (Fig. 5 und 6) durch indirekte (Fig. 5) oder direkte Anspritzung mit Spritzöl (15).

**Ansprüche**

1. Kolben zweiteiliger Bauart, dessen Oberteil dichtende, die Gaskräfte aufnehmende Funktion hat und dessen Unterteil führende, die Seitenkräfte aufnehmende Funktion hat, wobei beide Kolbenteile nur über einen Bolzen gelenkig verbunden sind, das Kolbenoberteil einen Kolbenboden (1) und einen Ringträger aufweist, welche über einen rotationssymmetrischen Kegelstumpf (2) mit zwei symmetrisch angeordneten Lagerstützen (3 und 4) zur Aufnahme des Kolbenbolzens (5) verbunden sind, dadurch gekennzeichnet, daß die Lagerstützen (3 und 4) durch Seitenwände (6 und 7) verbunden sind, daß die Abschlußebene (10) der Seitenwände (6 und 7) zwischen der Bolzenachse (11) und der oberen Bolzenauflage der Lagerstützen (14) liegt, und daß eine Spritzkühlung (15) zur Kühlung der Seitenwände (6 und 7) vorgesehen ist.

2. Kolbenoberteil nach Anspruch 1, dadurch gekennzeichnet, daß die Seitenwände (6 und 7) zum Kegelstumpf (2) hin durchbrochen sind.

3. Kolbenoberteil nach einem oder mehreren der vorangegangenen Ansprüche, dadurch gekennzeichnet, daß das Kühlöl durch mindestens eine Bohrung (9) in Höhe des Übergangs der Seitenwände zum Kegelstumpf (2) eine Abflußmöglichkeit erhält.

4. Kolbenoberteil nach einem oder mehreren der vorangegangenen Ansprüche, dadurch gekennzeichnet, daß das Kühlöl (15) an die innere Flächen der Seitenwände (6 und 7) gespritzt wird und über die äußeren Flächen der Seitenwände (6) und (7) rückfließen kann.

5. Kolbenoberteil nach einem oder mehreren der vorangegangenen Ansprüche, dadurch gekennzeichnet, daß die Seitenwände auf ihrer ganzen Fläche von der Ebene (10) bis zur Höhe der Öffnung der Bohrung (9) von Kühlöl bestrichen wird.

## Claims

1. A piston of a two-part construction whose upper part has a sealing function taking up gas forces and whose lower part has a guiding function taking up side forces, whereby both piston parts are pivotally connected by a single pin, the upper piston part comprising a piston head (1) and a ring support which are connected via a rotationally symmetrical truncated cone (2) with two symmetrically arranged bearing supports (3 and 4) for accepting the piston pin (5), **characterized in that** the bearing supports (3 and 4) are connected by side walls (6 and 7), the end plane (10) of the side walls (6 and 7) is placed between the pin axis (11) and the upper pin seating surface of the bearing supports (14) and a splash cooling (15) for cooling the side walls (6 and 7) is provided.

2. An upper piston part according to claim 1, **characterized in that** the side walls (6 and 7) present openings in the direction of the truncated cone (2).

3. An upper piston part according to one or any of the preceding claims, **characterized in that** the cooling oil receives a discharge possibility through at least one bore (9) in the region of transition from the side walls to the truncated cone (2).

4. An upper piston part according to one or any of the preceding claims, **characterized in that** the cooling oil (15) is splashed onto the inner surfaces of the side walls (6 and 7) and can flow back over the outside surfaces of the side walls (6 and 7).

5. An upper piston part according to one or any of the preceding claims, **characterized in that** the side walls are coated with cooling oil on their entire surface from plane (10) up to the level of the opening of bore (9).

## Revendications

1. Piston construit en deux parties, dont la partie supérieure a une fonction d'étoupage et de réception des puissances de gaz, et dont la partie inférieure a une fonction de guidage et de réception des puissances latérales ; les deux parties du piston ne sont reliées en articulation que par un boulon, la partie supérieure du piston possède un fond de piston (1) et un poutre annulaire, qui sont reliés par un tronc de cône (2) de symétrie de rotation avec deux supports de coussinet (3) et qui sont mis en position symmétrique pour recevoir le boulon de piston (5). Le piston est caractérisé par le fait que les supports de coussinet (3) et (4) sont reliés par des parois latérales (6) et (7), par le fait que le plan terminal (10) des parois latérales (6) et (7) se situe entre l'axe de boulon (11) et l'appui supérieur de boulon des supports de coussinet (14), et par le fait qu'un refroidissement au pistolet (15) est prévu pour refroidir les parois latérales (6) et (7).

2. Partie supérieure de piston selon revendication 1, caractérisée par le fait que les parois latérales (6) et (7) sont perforées vers le tronc de cône (2).

3. Partie supérieure de piston selon une ou plusieurs des revendications précédentes, caractérisée par le fait que l'huile de refroidissement a la possibilité de s'écouler par au moins un percement (9) au niveau du passage des parois latérales au tronc de cône (2).

4. Partie supérieure de piston selon une ou plusieurs des revendications précédentes, caractérisée par le fait que l'huile de refroidissement (15) est injectée sur les surfaces intérieures des parois latérales (6) et (7) et qu'il peut refluer par les surfaces extérieures des parois latérales (6) et (7).

5. Partie supérieure de piston selon une ou plusieurs des revendications précédentes, caractérisée par le fait que l'huile de refroidissement couvre toutes les surfaces des parois latérales à partir du plan (10) jusqu'au niveau de l'ouverture du percement (9).

Fig. 1

Fig. 2

Fig. 4

Fig. 3

Fig. 5

Fig. 6

Fig. 7